# FASCICULE DE BREVET EUROPEEN

(11) **EP 0 719 704 B1**
(45) Date de publication et mention de la délivrance du brevet: **01.09.1999**
(21) Numéro de dépôt: 95402897.3
(22) Date de dépôt: 21.12.1995
(51) Int. Cl.: B64C 9/32

(54) **Aérofrein à fente variable pour voilure d'aéronef**
Bremsklappe mit verstellbarem Spalt für einen Flugzeugflügel
Spoiler with adjustable slit for the airfoil of an aircraft

(30) Priorité: 26.12.1994 FR 9415641
(43) Date de publication de la demande: 03.07.1996
(73) Titulaire: AEROSPATIALE Société Nationale Industrielle, 75781 Paris Cédex 16 (FR)
(72) Inventeur: Ciprian, Danilo, F-31840 Aussonne (FR); Hemadou, Benoît, F-31170 Tournefeuille (FR); Chaumel, Pascal, F-31830 Plaisance du Touch (FR)
(74) Mandataire: Poulin, Gérard

(56) Documents cités:
- FR-A- 2 138 629
- GB-A- 581 876
- GB-A- 1 349 739

## Description

L'invention concerne un aérofrein conçu pour être placé sur une face d'extrados d'une voilure d'aéronef, entre un longeron arrière de cette voilure et un volet hypersustentateur articulé sur le longeron arrière du caisson de voilure.

Sur les avions, les aérofreins qui sont placés entre le longeron arrière de chacune des ailes et les volets hypersustentateurs situés à l'arrière de ce longeron arrière, remplissent généralement trois fonctions différentes :
- Une première fonction est une fonction de braquage permettant de donner du roulis à l'avion en vol ; elle est assurée en actionnant les aérofreins qui équipent les deux ailes de façon dissymétrique, avec un angle de braquage relativement faible (par exemple, environ 11°) ; cette fonction est généralement appelée fonction "spoiler" ;
- la deuxième fonction remplie par les aérofreins est une fonction de perte d'altitude en vol ; elle consiste à actionner les aérofreins équipant les deux ailes de façon symétrique, avec un angle braquage faible ou élevé (par exemple jusqu'à 60°) selon la rapidité de perte d'altitude désirée ; le décollement d'air créé en aval des aérofreins entraîne alors une diminution de la portance et une augmentation de la traînée ; cette fonction est généralement appelée fonction "aérofrein" ;
- la troisième fonction remplie par les aérofreins concerne le freinage de l'avion à l'atterrissage ; elle consiste à actionner au sol les aérofreins équipant chacune des ailes de façon symétrique, avec un angle braquage maximal ; cette troisième fonction des aérofreins est généralement appelée fonction "lift dumper".

Dans l'état actuel de la technique, chaque aérofrein se présente sous la forme d'un panneau unique articulé sur le longeron arrière de l'aile correspondante. Lorsque l'aérofrein est à l'état de repos, ce panneau unique et fermé est situé dans le prolongement de la face d'extrados de l'aile, de façon à assurer la continuité entre cette dernière et les volets hypersustentateurs. Un faible braquage du panneau unique constituant chaque aérofrein peut être effectué en vol soit pour assurer la fonction "spoiler", soit pour assurer la fonction "aérofrein". En outre, un braquage plus important du panneau unique peut être effectué soit en vol, pour assurer la fonction "aérofrein", soit au sol, pour assurer la fonction "lift dumper".

Les aérofreins existants, formés d'un panneau unique, remplissent parfaitement les fonctions qui leurs sont assignées aux forts angles de braquage, en assurant simultanément une diminution importante de la portance et une augmentation notable de la trainée.

En revanche, lorsque les aérofreins formés d'un panneau unique sans création de fente sont utilisés à de faibles angles de braquage, il se produit immédiatement à l'arrière de l'aérofrein une zone de décollement qui se traduit par la création de turbulences de part et d'autre de l'aérofrein. Ces turbulences constituent alors un inconvénient notable, notamment lorsque les aérofreins sont utilisés dans leur fonction "spoiler".

Dans le document GB-A-1 349 739, sur lequel est fondé le préambule de la revendication 1, il est proposé de réaliser un aérofrein sous la forme d'au moins deux panneaux aptes à coulisser l'un par rapport à l'autre pour donner à l'aérofrein un caractère télescopique. Plus précisément, la longueur de l'aérofrein est plus grande lorsqu'il est sorti que lorsqu'il est rentré. Son comportement reste, par ailleurs comparable à celui d'un aérofrein formé d'un panneau unique.

Par ailleurs, le document GB-A-581 876 décrit un aérofrein formé de deux panneaux reliés entre eux par une biellette et aptes à pivoter en sens inverse l'un de l'autre, d'un angle différent, autour de deux axes disposés de part et d'autre de l'aérofrein. Plus précisément, l'axe d'articulation de chaque panneau est placé au-delà de l'autre panneau. Ainsi, l'aérofrein passe progressivement d'un état fermé dans un état ouvert dans lequel l'effort de déploiement appliqué sur le panneau extérieur est assisté par l'air qui s'engouffre sous le panneau intérieur.

L'invention a précisément pour objet un aérofrein dont la conception originale lui permet de remplir les fonctions "spoiler", "aérofrein" et "lift dumper" en se comportant comme un aérofrein à panneau unique pour les forts braquages et en créant à faible braquage une fente, variable selon l'angle de braquage, permettant de limiter la zone de décollement à l'arrière de l'aérofrein et, par conséquent, les turbulences de part et d'autre de l'aérofrein.

Conformément à l'invention, ce résultat est obtenu au moyen d'une voilure d'aéronef comprenant un aérofrein, placé sur une face d'extrados de la voilure, l'aérofrein comprenant un premier panneau et un deuxième panneau et des moyens de commande d'inclinaison, dont un actionnement permet de placer l'aérofrein dans l'un des états suivants :
- un état fermé, dans lequel le premier panneau et le deuxième panneau sont joints et placés dans le prolongement de la face d'extrados ;
- un état ouvert, dans lequel le premier panneau et le deuxième panneau sont joints et braqués vers l'extérieur selon un même angle, par rapport à la face d'extrados ;
   caractérisé en ce que :
- le premier panneau et le deuxième panneau sont placés dans cet ordre entre un longeron arrière de la voilure et un volet hypersustentateur, et en ce que
- un actionnement des moyens de commande d'inclinaison permet de plus de placer l'aérofrein dans des états intermédiaires entre l'état fermé et l'état ouvert, dans lesquels le deuxième panneau est braqué vers l'extérieur par rapport au premier panneau et à la face d'extrados, et est écarté du premier panneau, de façon à former une fente.

Dans une forme de réalisation préférentielle de l'invention, les états intermédiaires comprennent un état de très faible braquage, dans lequel le premier panneau est légèrement braqué vers l'intérieur par rapport à la face d'extrados de la voilure, et un état de faible braquage, dans lequel le premier panneau est placé dans le prolongement de la face d'extrados, et un état de braquage moyen, dans lequel le premier panneau est braqué vers l'extérieur par rapport à la face d'extrados, d'un angle de braquage inférieur à l'angle de braquage du deuxième panneau.

Selon les caractéristiques que l'on désire donner à l'aérofrein aux forts angles de braquage, le bord du premier panneau adjacent au longeron arrière peut être soit décalé vers l'extérieur de la voilure par rapport à la face d'extrados, soit placé sensiblement dans le prolongement de cette face d'extrados, dans l'état ouvert de l'aérofrein.

Dans la forme de réalisation préférentielle de l'invention, le premier panneau et le deuxième panneau sont montés pivotants sur le longeron arrière par un premier axe commun sensiblement parallèle à ce longeron arrière.

Par ailleurs, s'il est possible d'actionner les deux panneaux de l'aérofrein par des moyens de commande totalement séparés, les moyens de commande d'inclinaison agissent de préférence simultanément sur le premier panneau et sur le deuxième panneau par un même mécanisme de commande.

Dans ce cas, le mécanisme de commande comprend avantageusement au moins un ensemble comportant une pièce pivotante articulée sur le longeron arrière par un deuxième axe, une première bielle articulée sur le premier panneau par un troisième axe et sur la pièce pivotante par un quatrième axe, et une deuxième bielle articulée sur le deuxième panneau par un cinquième axe et sur la pièce pivotante par un sixième axe, les deuxième, troisième, quatrième, cinquième et sixième axes étant sensiblement parallèles au premier axe commun.

Les premier, deuxième, troisième, quatrième et cinquième axes sont distincts les uns des autres.

Selon le cas, le sixième axe peut être, lui aussi distinct des autres axes ou, au contraire, confondu avec le quatrième axe.

Dans le premier cas, le deuxième axe est plus éloigné de la face d'extrados de la voilure que le premier axe commun et, dans l'état fermé de l'aérofrein, le deuxième axe est situé sensiblement entre le troisième axe et le quatrième axe. Le sixième axe est alors décalé vers le volet hypersustentateur et en éloignement de la face d'extrados, par rapport au deuxième axe.

Par ailleurs, dans l'état fermé de l'aérofrein, le deuxième axe est légèrement décalé vers le volet hypersustentateur, par rapport à un plan contenant le troisième axe et le quatrième axe. Cette caractéristique permet de faire précéder l'état de faible braquage défini précédemment par l'état de très faible braquage, dans lequel le premier panneau est légèrement braqué vers l'intérieur.

En outre, le deuxième axe, le cinquième axe est sensiblement plus éloigné de l'axe commun que le troisième axe.

Dans la forme de réalisation préférentielle de l'invention, le mécanisme de commande comprend deux ensembles tels que définis ci-dessus, décalés sensiblement parallèlement au longeron arrière de la voilure et les moyens de commande d'inclinaison comportent un vérin placé entre ces deux ensembles et reliant le bord de fuite au deuxième panneau.

On décrira à présent, à titre d'exemple non limitatif, une forme de réalisation préférentielle de l'invention, en se référant aux dessins annexés, dans lesquels :
- la figure 1 est une vue de dessus représentant une aile d'avion équipée d'aérofreins conforme à l'invention ;
- la figure 2 est une vue en perspective illustrant à plus grande échelle l'un des aérofreins équipant l'aile de la figure 1 ;
- la figure 3 est une vue en coupe transversale de l'aérofrein illustré sur la figure 2, représentant cet aérofrein dans son état fermé ;
- la figure 4 est une vue en coupe comparable à la figure 3, illustrant en trait plein l'aérofrein dans un état intermédiaire correspondant à un faible braquage et, en traits mixtes, l'aérofrein dans son état ouvert correspondant à un fort braquage ; et
- la figure 5 est une vue en coupe comparable à la figure 3, illustrant une variante de réalisation de l'invention.

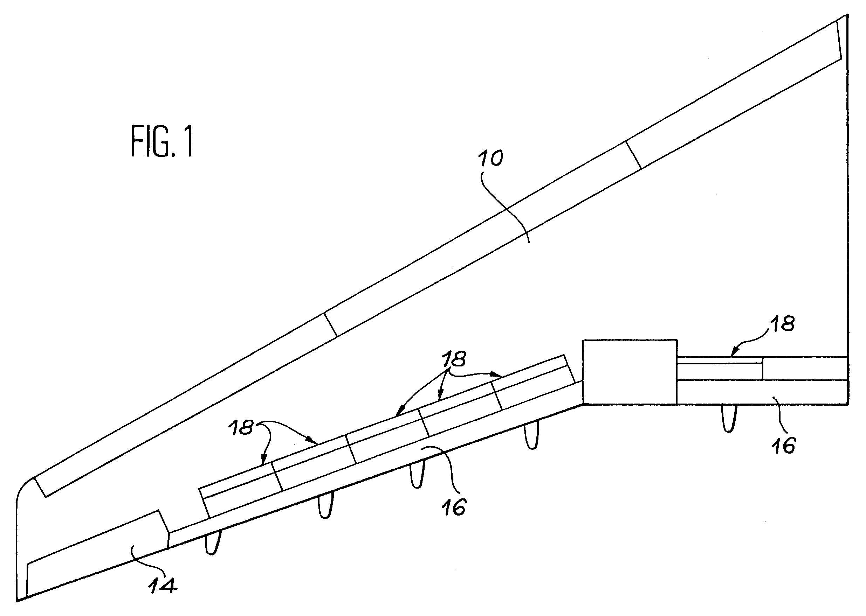

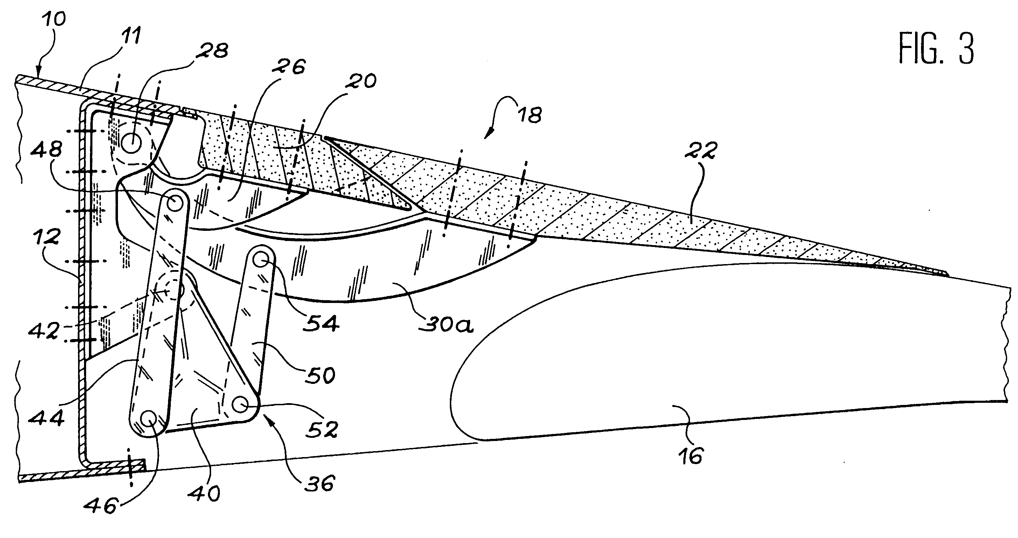

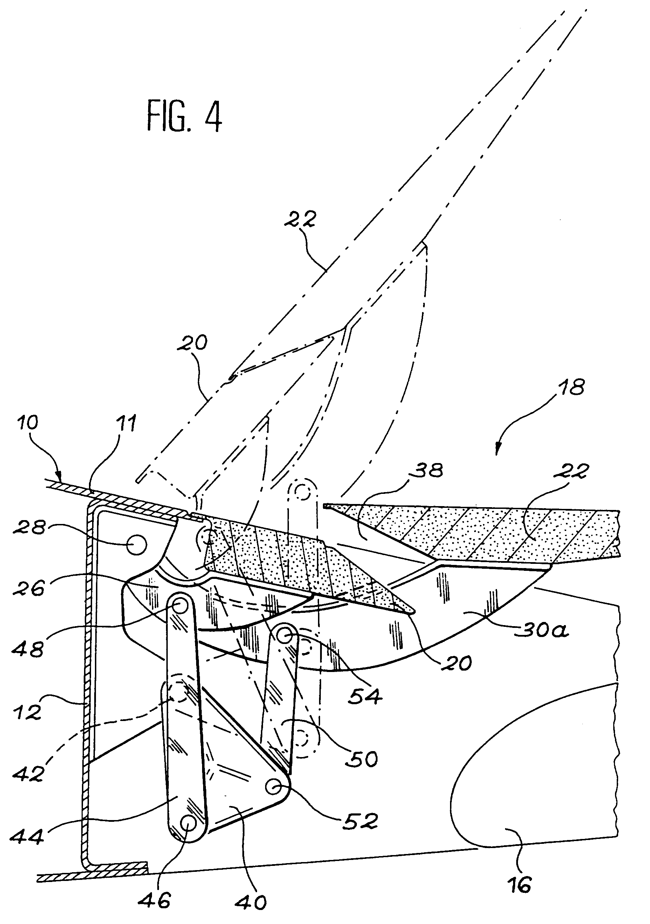

Sur la figure 1, on a représenté en vue de dessus une aile d'aéronef, dont la structure fixe est désignée par la référence 10. Cette structure fixe 10 est délimitée vers l'arrière par un longeron arrière 12 (figures 3 et 4). A proximité de l'extrémité de l'aile, ce longeron 12 supporte de façon pivotante un ou plusieurs ailerons 14 dirigés vers le bord de fuite. Sur le reste de l'aile, le longeron arrière 12 supporte de façon pivotante des volets hypersustentateurs 16 également dirigés sur le bord de fuite.

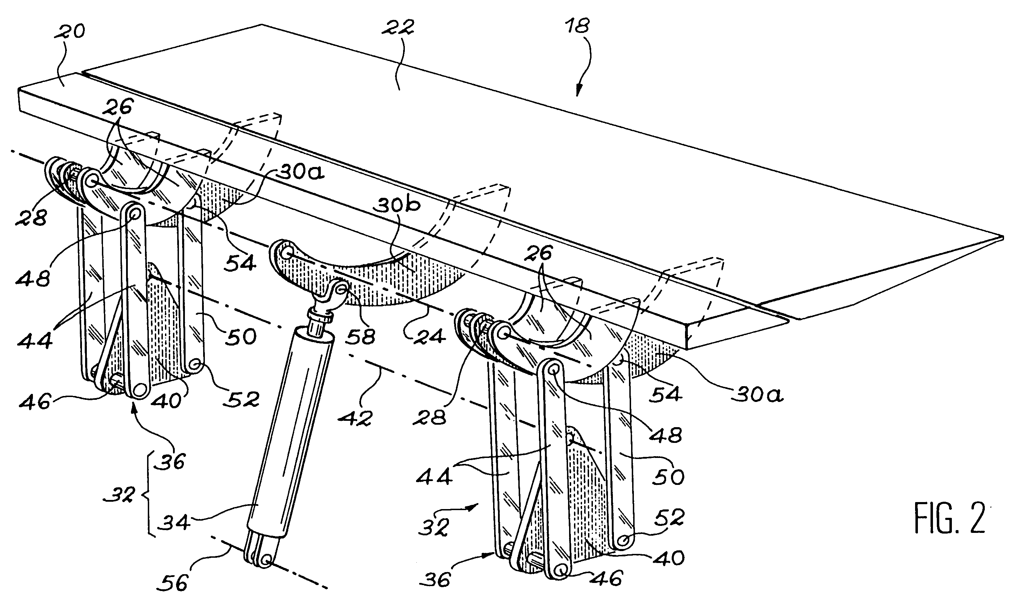

Sur la face d'extrados de l'aile, visible sur la figure 1, des aérofreins 18 sont interposés entre le longeron arrière 12 et les volets hypersustentateurs 16. Conformément à l'invention, ces aérofreins 18 présentent une structure originale dont une forme de réalisation préférentielle va à présent être décrite en détail en se référant aux figures 2 à 4.

Au lieu de comprendre un panneau unique comme les aérofreins existants, les aérofreins 18 conformes à l'invention comprennent deux panneaux 20 et 22, articulés l'un et l'autre sur le longeron arrière 12 de l'aile autour d'un axe commun 24, orienté sensiblement parallèlement à ce longeron arrière.

De façon plus précise, le premier panneau 20 de chacun des aérofreins 18, interposé entre le longeron arrière 12 et le deuxième panneau 22, est fixé à proximité de chacune de ses extrémités sur deux paires de supports arqués 26. Les extrémités de ces supports arqués 26 opposées au premier panneau 20 sont supportées de façon pivotante par le longeron arrière 12 de l'aile, par l'intermédiaire de deux tourillons 28 matérialisant l'axe commun 24.

Par ailleurs, le deuxième panneau 22, interposé sur la face d'extrados de l'aile entre le premier panneau 20 et le volet hypersustentateur 16, est fixé à l'extrémité de trois supports arqués 30a et 30b régulièrement répartis sur toute la longueur du panneau 22. Les extrémités opposées des supports arqués 30a placés à proximité des extrémités du panneau 22 sont montées pivotantes sur les tourillons 28, entre les supports arqués 26 supportant le premier panneau 20. Par ailleurs, le support arqué 30b placé au centre du deuxième panneau 22 est monté pivotant par son extrémité opposée sur le longeron arrière 12 de l'aile, par l'intermédiaire d'un autre tourillon (non représenté) matérialisant l'axe commun 24.

L'aérofrein 18 comporte en outre des moyens de commande d'inclinaison des panneaux 20 et 22, permettant de faire passer l'aérofrein d'un état fermé, illustré sur la figure 3 à un état ouvert illustré en traits mixes sur la figure 4, en passant par des états intermédiaires tels que celui qui est illustré en trait plein sur la figure 4. Ces moyens de commande d'inclinaison sont désignés de façon générale par la référence 32 sur les figures.

Dans la forme de réalisation préférentielle représentée notamment sur la figure 2, les moyens 32 de commande d'inclinaison des panneaux 20 et 22 de l'aérofrein 18 comprennent un vérin unique 34 ainsi qu'un mécanisme de commande formé de deux ensembles identiques 36. Grâce à ce mécanisme de commande l'action exercée par le vérin 34 se traduit par une cinématique distincte et précise de chacun des deux panneaux 20 et 22 constituant la partie active de l'aérofrein 18.

Cette cinématique est telle que, lorsque l'aérofrein est dans son état fermé, le premier panneau 20 et le deuxième panneau 22 sont joints et placés dans le prolongement de la face d'extrados 11 de la structure fixe 10 de l'aile. Dans cet état fermé de l'aérofrein 18, il n'existe aucune fente entre la structure fixe 10 de l'aile, les panneaux 20 et 22 et le volet hypersustentateur 16. La continuité de la face d'extrados 11 de l'aile est ainsi assurée.

La cinématique déterminée par le mécanisme de commande des panneaux 20 et 22 est également telle que, lorsque l'aérofrein 18 occupe son état ouvert illustré en traits mixtes sur la figure 4, qui correspond à un fort braquage des panneaux 20 et 22 vers l'extérieur par rapport à la face d'extrados 11 (par exemple, environ 60°), les panneaux 20 et 22 sont également joints de façon à assurer un freinage aérodynamique maximal.

Dans la forme de réalisation illustrée sur la figure 4, dans cet état ouvert de l'aérofrein, le bord du premier panneau 20 adjacent au longeron arrière 12 de la partie fixe de l'aile est décalé vers l'extérieur de cette dernière par rapport à la face d'extrados 11.

Cet agencement ne doit cependant pas être considéré comme limitatif. En effet, dans cet état ouvert de l'aérofrein 18, la cinématique définie par le mécanisme de commande peut aussi être conçue de telle sorte que le bord du panneau 20 adjacent au longeron arrière 12 soit placé sensiblement dans le prolongement de la face d'extrados 11. Ce résultat peut être obtenu en décalant vers l'arrière l'axe commun 24 des panneaux 20 et 22.

Enfin, comme on l'a illustré en trait plein sur la figure 4, la cinématique définie par le mécanisme de commande de l'aérofrein 18 est telle qu'entre l'état fermé et l'état ouvert de l'aérofrein, celui-ci passe par des états intermédiaires dans lesquels le premier panneau 20 reste sensiblement dans la position qu'il occupe dans l'état fermé, alors que le deuxième panneau 22 est braqué vers l'extérieur d'un angle relativement faible (par exemple, environ 11°), Dans ces conditions, il existe entre le premier volet 20 et le deuxième volet 22 une fente 38 qui permet de conserver un écoulement laminaire de l'air et évite ou réduit de façon notable la formation de turbulences de part et d'autre de l'aérofrein. La largeur de cette fente varie selon l'angle de braquage du deuxième panneau 22.

Comme l'illustre la figure 2, le vérin hydraulique 34 qui assure la commande de braquage des panneaux 20 et 22, est interposé entre le longeron arrière 12 et le support arqué 30b fixé au centre du deuxième panneau 22. De façon plus précise, une première extrémité du vérin 34 est articulée sur le longeron arrière 12 par un axe 56 et l'autre extrémité du vérin 34 est articulée sur le support arqué central 30b par un axe 58. Ces axes 56 et 58 sont parallèles à l'axe de pivotement 24. L'axe 56 est décalé vers le bas et vers l'avant par rapport à l'axe de pivotement 24 des panneaux.

Dans la forme de réalisation préférentielle décrite, chacun des deux ensembles 36 constituant le mécanisme de commande des panneaux 20 et 22 est placé à proximité des extrémités de ces panneaux et interposé entre le longeron arrière 12 de la partie fixe de l'aile et les supports arqués 26 et 30a fixés respectivement sur le premier 20 et sur le deuxième panneau 22. Ces deux ensembles 36 étant identiques, seul l'un d'entre eux va à présent être décrit en détail en se référant aux figures 2 à 4.

Chaque ensemble 36 comporte tout d'abord une pièce pivotante 40, par exemple de forme triangulaire. Cette pièce pivotante 40 est articulée sur le longeron arrière 12 par un axe 42 parallèle à l'axe commun 24 des panneaux 20 et 22 et décalée en éloignement de la face d'extrados 11 par rapport à cet axe 24. L'axe d'articulation 42 de la pièce pivotante 40 sur le longeron arrière 12 est en outre légèrement décalé vers le volet hypersustentateur 16 par rapport à l'axe commun 24 des panneaux 20 et 22.

L'ensemble 36 comporte de plus une première bielle 44 (double dans la forme de réalisation représentée sur la figure 2), qui relie la pièce pivotante 40 au premier panneau 20. Plus précisément, une première extrémité de la bielle 44 est articulée sur la pièce pivotante 40 par un premier axe 46 parallèle aux axes 24 et 42. L'autre extrémité de la première bielle 44 est articulée sur les supports arqués 26 fixés sur le premier panneau 20 par un axe 48 également parallèle aux axes 24 et 42. Cet axe 48 est sensiblement aligné avec l'axe 58 d'articulation du vérin 34 sur le support arqué 30b (figure 2).

Comme l'illustre la figure 3, dans l'état fermé de l'aérofrein 18, les axes 46 et 48 sont situés de part et d'autre de l'axe 42 et ce dernier est placé à proximité immédiate du plan passant par les axes 46 et 48. Plus précisément, l'axe 42 est alors légèrement décalé vers le volet hypersustentateur 16 par rapport à ce plan, qui est lui-même sensiblement perpendiculaire à la face d'extrados 11.

Du fait de cet agencement, un faible pivotement de la pièce 40 autour de son axe 42, dans le sens inverse des aiguilles d'une montre à partir de l'état fermé de l'aérofrein, est pratiquement sans effet sur le premier volet 20. En effet, l'axe 42 se rapproche d'abord du plan passant par les axes 46 et 48, avant de s'en éloigner progressivement.

C'est la raison pour laquelle, dans la position intermédiaire des panneaux 20 et 22 illustrée en trait plein sur la figure 4, appelée position de faible braquage, le panneau 20 occupe la même position que dans son état fermé illustré sur la figure 3.

Avant de parvenir à cette position de faible braquage, l'aérofrein passe par un état de très faible braquage, dans lequel le premier panneau 20 est légèrement braqué vers l'intérieur par rapport à la face d'extrados 11. Cet état de très faible braquage inclut la position dans laquelle les trois axes 42, 46 et 48 se trouvent dans un même plan.

L'état de très faible braquage est suivi par l'état de faible braquage, illustré en trait plein sur la figure 4, dans lequel le premier panneau se retrouve exactement dans la position qu'il occupait dans l'état fermé illustré sur la figure 3. Ce dernier état est suivi d'un état de braquage moyen, dans lequel le premier 20 se braque progressivement vers l'extérieur, du fait que le plan passant par les axes 46 et 48 s'écarte de plus en plus rapidement de l'axe 42 de la pièce pivotante 40.

Chacun des ensembles 36 comprend de plus une deuxième bielle 50, interposée entre la pièce pivotante 40 et le deuxième panneau 22. Une première extrémité de cette deuxième bielle 50 est articulée sur la pièce pivotante 40 par un axe 52 et son extrémité opposée est articulée sur le support arqué 30a par un axe 54. Les axes 52 et 54 sont parallèles entre eux et aux axes 24, 42, 46 et 48. Chacun de ces axes est en outre sensiblement parallèle au longeron arrière 12.

La distance séparant l'axe 54 de l'axe commun 24 des panneaux est sensiblement plus grande (par exemple, environ double) de celle qui sépare l'axe 48 de cet axe commun 24.

En section, les axes 42, 46 et 52 forment un triangle sensiblement équilatéral, l'axe 52 étant décalé vers l'arrière par rapport au plan contenant les axes 42 et 46, dans l'état fermé de l'aérofrein illustré sur la figure 3. Dans ce même état, le plan passant par les axes 52 et 54 est sensiblement parallèle au plan passant par les axes 46 et 48.

Du fait de cet agencement, un pivotement de la pièce 40 dans le sens inverse des aiguilles d'une montre autour de son axe 42, à partir de l'état fermé de l'aérofrein, a immédiatement pour effet de braquer le deuxième panneau 22 vers l'extérieur par rapport à la face d'extrados 11. Cela explique que dans l'état intermédiaire illustré en trait plein sur la figure 4, appelé précédemment "état de faible braquage", le deuxième panneau 22 est braqué d'un angle égal par exemple à environ 11° par rapport à la face d'extrados 11, alors que le premier panneau 20 reste aligné avec cette face d'extrados.

Lorsque le mouvement de pivotement de la pièce 40 dans le sens inverse des aiguilles d'une montre se poursuit, le braquage du deuxième panneau 22 augmente de façon relativement régulière. Cependant, du fait que l'axe 54 est plus éloigné de l'axe de pivotement 24 des panneaux que l'axe 48, le braquage du premier panneau 20 s'effectue ensuite plus rapidement. Par conséquent, le premier panneau 20 rejoint le deuxième panneau 22 pour un angle de braquage correspondant au braquage maximal de l'aérofrein (par exemple, environ 60°). Dans cet état ouvert de l'aérofrein, illustré en traits mixtes sur la figure 4, les bords adjacents des panneaux 20 et 22 reviennent alors sensiblement au contact l'un de l'autre, de telle sorte que la fente 38 qui existait entre les panneaux dans les états intermédiaires de l'aérofrein est supprimée.

Il est à noter que les bords adjacents des panneaux 20 et 22, qui définissent entre eux la fente 38 dans les états intermédiaires de l'aérofrein, sont des bords biseautés ou inclinés de façon à définir une fente 38 orientée vers l'arrière à partir de la face d'extrados 11, prolongée par la face extérieure du premier panneau 20.

Lorsque le vérin 34 est actionné, il agit directement sur le deuxième panneau 22 par l'intermédiaire du support arqué central 30b. Le mouvement de pivotement du deuxième panneau 22 commandé par le vérin est transmis aux pièces 40 par les bielles 50. Il se transforme donc en un mouvement de pivotement des pièces 40 autour de leur axe 42, dans le sens inverse des aiguilles d'une montre en considérant les figures. Le pivotement des pièces 40 est à son tour transmis au premier panneau 20 par les bielles 44 articulées sur les supports arqués 26. Les dispositions relatives des différents axes déterminent la cinématique qui a été décrite en détail précédemment.

Dans cette cinématique, l'état fermé des aérofreins 18 correspond aux conditions de vol normales de l'aéronef.

Les états intermédiaires des aérofreins 18, tel que l'état de faible braquage illustré en trait plein sur la figure 4, peuvent être utilisé en vol soit pour la fonction "spoiler", soit pour la fonction "aérofrein". Dans les deux cas, la présence de la fente 38 permet d'éviter des décollements trop importants de l'écoulement d'air, notamment de part et d'autre de l'aérofrein. Les turbulences qui se produisent généralement dans ces conditions avec les aérofreins existants sont ainsi supprimées ou fortement atténuées.

Enfin, l'état d'ouverture des aérofreins 18, illustré en traits mixtes sur la figure 4, peut être utilisé soit au sol, dans la fonction "lift dumper", soit en vol, dans la fonction "aérofrein". les deux panneaux 20 et 22 se comportent alors comme un panneau unique, ce qui assure la pleine efficacité de l'aérofrein.

Bien entendu, l'invention n'est pas limitée à la forme de réalisation qui vient d'être décrite à titre d'exemple. Ainsi, on conçoit que les deux panneaux de l'aérofrein peuvent être commandés de façon totalement distincte par des moyens de commande séparés permettant d'obtenir la cinématique souhaitée. Par ailleurs, le mécanisme de commande décrit peut être remplacé par tout mécanisme techniquement équivalent satisfaisant également la cinématique décrite. De ce point de vue et comme on l'a déjà indiqué, il est à noter que l'aérofrein selon l'invention peut présenter à volonté une légère fente entre le premier panneau et la face d'extrados ou pas de fente du tout dans l'état ouvert de l'aérofrein. De même, il est à noter que les angles correspondants aux états intermédiaires et ouvert peuvent être modifiés à volonté en agissant sur les coordonnés des différents axes. Ainsi, l'état de très faible braquage, dans lequel le premier panneau est légèrement braqué vers l'intérieur de l'aile peut être supprimé, par exemple en plaçant l'axe 42 dans l'alignement des axes 46 et 48, ou en décalant cet axe 42 vers le longeron arrière 12, dans l'état fermé de l'aérofrein, lorsqu'on utilise le mécanisme de commande décrit.

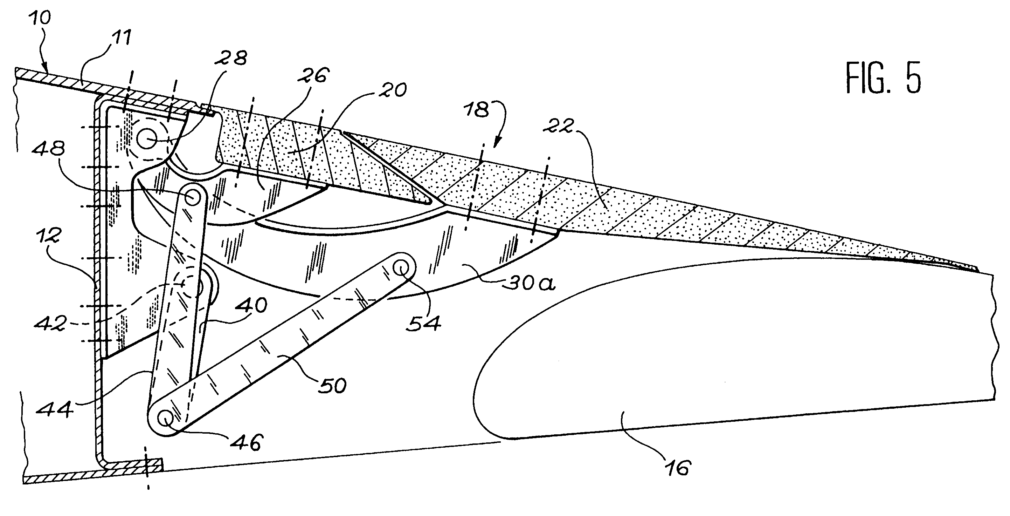

Par ailleurs, la figure 5 illustre une variante de réalisation du mécanisme de commande des deux panneaux du volet hypersustentateur. Pour faciliter la compréhension, les organes identiques ou comparables à ceux de la forme de réalisation des figures 1 à 4 y sont désignés par les mêmes références.

La variante de réalisation de la figure 5 se distingue essentiellement de la forme de réalisation décrite précédemment par le fait que les axes 46 et 52 sont confondus. En d'autre termes, les deux bielles 44 et 50 sont articulées sur la pièce 40 par un axe commun 46. Par conséquent, au lieu d'être triangulaire, la pièce 40 a alors la forme d'un simple levier. Dans ces conditions, la cinématique du deuxième panneau 22 du volet hypersustentateur est assurée en décalant vers l'arrière l'axe 54 par lequel ce deuxième panneau est articulé sur la bielle 50.

## Revendications

1. Voilure d'aéronef comprenant un aérofrein, placé sur une face d'extrados (11) de la voilure (10), l'aérofrein comprenant un premier panneau (20) et un deuxième panneau (22) et des moyens (32) de commande d'inclinaison, dont un actionnement permet de placer l'aérofrein dans l'un des états suivants :
- un état fermé, dans lequel le premier panneau (20) et le deuxième panneau (22) sont joints et placés dans le prolongement de la face d'extrados (11) ;
- un état ouvert, dans lequel le premier panneau (20) et le deuxième panneau (22) sont joints et braqués vers l'extérieur selon un même angle, par rapport à la face d'extrados (11) ;
caractérisé en ce que :
- le premier panneau (20) et le deuxième panneau (22) sont placés dans cet ordre entre un longeron arrière (12) de la voiture et un volet (16) hypersustentateur, et en ce que
- un actionnement des moyens (32) de commande d'inclinaison permet de plus de placer l'aérofrein dans des états intermédiaires entre l'état fermé et l'état ouvert, dans lesquels le deuxième panneau (22) est braqué vers l'extérieur par rapport au premier panneau (20) et à la face d'extrados (11), et est écarté du premier panneau (20), de façon à former une fente (38).

2. Voiture d'aéronef selon la revendication 1, caractérisée par le fait que les états intermédiaires comprennent un état de très faible braquage, dans lequel le premier panneau (20) est légèrement braqué vers l'intérieur par rapport à la face d'extrados (11), un état de faible braquage, dans lequel le premier panneau (20) est placé dans le prolongement de la face d'extrados (11), et un état de braquage moyen, dans lequel le premier panneau (20) est braqué vers l'extérieur par rapport à la face d'extrados (11), d'un angle inférieur à un angle de braquage du deuxième panneau (22).

3. Voilure d'aéronef selon l'une quelconque des revendications 1 et 2, caractérisée par le fait que, dans l'état ouvert de l'aérofrein, un bord du premier panneau (20) adjacent au longeron arrière (12) est décalé vers l'extérieur de la voilure (10) par rapport à la face d'extrados (11).

4. Voilure d'aéronef selon l'une quelconque des revendications 1 et 2, caractérisée par le fait que, dans l'état ouvert de l'aérofrein, un bord du premier panneau (20) adjacent au longeron arrière (12) est placé sensiblement dans le prolongement de la face d'extrados (11).

5. Voilure d'aéronef selon l'une quelconque des revendications précédentes, caractérisée par le fait que le premier panneau (20) et le deuxième panneau (22) sont montés pivotants sur le longeron arrière (12) par un premier axe commun (24), sensiblement parallèle à ce longeron arrière.

6. Voilure d'aéronef selon l'une quelconque des revendications précédentes, caractérisée par le fait que les moyens (32) de commande d'inclinaison agissent simultanément sur le premier panneau (20) et sur le deuxième panneau (22) par un même mécanisme de commande (36).

7. Voilure d'aéronef selon les revendications 5 et 6 combinées, caractérisée par le fait que le mécanisme de commande comprend au moins un ensemble (36) comportant une pièce pivotante (40) articulée sur le longeron arrière (12) par un deuxième axe (42), une première bielle (44) articulée sur le premier panneau (20) par un troisième axe (48) et sur la pièce pivotante par un quatrième axe (46), et une deuxième bielle (50) articulée sur le deuxième panneau (22) par un cinquième axe (54) et sur la pièce pivotante par un sixième axe (52), les deuxième, troisième, quatrième, cinquième et sixième axes étant sensiblement parallèles au premier axe commun (24).

8. Voilure d'aéronef selon la revendication 7, caractérisée par le fait que les premiers, deuxième, troisième, quatrième, cinquième et sixième axes sont distincts les uns des autres.

9. Voilure d'aéronef selon la revendication 8, caractérisée par le fait que le deuxième axe (42) est plus éloigné de la face d'extrados (11) que le premier axe commun (24), et que, dans l'état fermé de l'aérofrein, le deuxième axe (42) est situé sensiblement entre le troisième axe (48) et le quatrième axe (46), le sixième axe (52) étant alors décalé vers le volet hypersustentateur (16) et en éloignement de la face d'extrados (11), par rapport au deuxième axe (42).

10. Voilure d'aéronef selon la revendication 9, caractérisée par le fait que, dans l'état fermé de l'aérofrein, le deuxième axe (42) est légèrement décalé vers le volet hypersustentateur (16), par rapport à un plan contenant le troisième axe (48) et le quatrième axe (46).

11. Voilure d'aéronef selon la revendication 7, caractérisée par le fait que les premier, deuxième, troisième, quatrième et cinquième sont distincts des autres, les quatrième et sixième axes étant confondus.

12. Voilure d'aéronef selon l'une quelconque des revendications 7 à 11, caractérisée par le fait que le cinquième axe (54) est plus éloigné de l'axe commun (24) que le troisième axe (48).

13. Voilure d'aéronef selon l'une quelconque des revendications 7 à 12, caractérisée par le fait que le mécanisme de commande comprend deux ensembles (36) décalés sensiblement parallèlement au longeron arrière (12), les moyens (32) de commande d'inclinaison comportant de plus un vérin (34) placé entre ces deux ensembles et reliant le longeron arrière (12) au deuxième panneau (22).

## Claims

1. Aircraft wing comprising an airbrake, placed on an upper surface (11) of the wing (10), the airbrake comprising a first panel (20) and a second panel (22) and inclination control means (32), whereof an actuation makes it possible to place the airbrake in one of the following states:
- a closed state, in which the first panel (20) and the second panel (22) are joined and placed in the extension of the upper surface (11),
- an open state in which the first panel (20) and the second panel (22) are joined and deflected towards the outside according to the same angle with respect to the upper surface (11),
characterized in that:
- the first panel (20) and the second panel (22) are placed in this order between a rear spar (12) of the wing and a wing flap (16) and in that
- an actuation of the inclination control means (32) also makes it possible to place the airbrake in intermediate states between the closed state and the open state, in which the second panel (22) is deflected towards the outside with respect to the first panel (20) and the upper surface (11) and is spaced from the first panel (20) in such a way as to form a slit (38).

2. Airbrake according to claim 1, characterized in that the intermediate states comprise a very low deflection state, in which the first panel (20) is slightly deflected towards the interior with respect to the upper surface (11), a low deflection state, in which the first panel (20) is placed in the extension of the upper surface (11), and an average deflection state, in which the first panel (20) is deflected towards the exterior relative to the upper surface (11) by an angle smaller than the deflection angle of the second panel (22).

3. Airbrake according to either of the claims 1 and 2, characterized in that, in the open state of the airbrake, one edge of the first panel (20) adjacent to the rear spar (12) is displaced towards the exterior of the wing (10) with respect to the upper surface (11).

4. Airbrake according to either of the claims 1 and 2, characterized in that, in the open state of the airbrake, one edge of the first panel (20) adjacent to the rear spar (12) is placed substantially in the extension of the upper surface (11).

5. Airbrake according to any one of the preceding claims, characterized in that the first panel (20) and the second panel (22) are installed in pivoting manner on the rear spar (12) by a first common pin (24) substantially parallel to the rear spar.

6. Airbrake according to any one of the preceding claims, characterized in that inclination control means (32) simultaneously act on the first panel (20) and the second panel (22) by the same control mechanism (36).

7. Airbrake according to claims 5 and 6 combined, characterized in that the control mechanism comprises at least one assembly (36) having a pivoting part (40) articulated to the rear spar (12) by a second pin (42), a first rod (44) articulated to the first panel (20) by a third pin (48) and to the pivoting part by a fourth pin (46), and a second rod (50) articulated to the second panel (22) by a fifth pin (54) and to the pivoting part by a sixth pin (52), the second, third, fourth, fifth and sixth pins being substantially parallel to the first common pin (24).

8. Airbrake according to claim 7, characterized in that the first, second, third, fourth, fifth and sixth pins are separate from one another.

9. Airbrake according to claim 8, characterized in that the second pin (42) is further removed from the upper surface (11) than the first common pin (24) and that, in the closed state of the airbrake, the second pin (42) is located substantially between the third pin (48) and the fourth pin (46), the sixth pin (52) then being displaced towards the wing flap (16) and moving away from the upper surface (11) compared with the second pin (42).

10. Airbrake according to claim 9, characterized in that, in the closed state of the airbrake, the second pin (42) is slightly displaced towards the wing flap (16) with respect to a plane containing the third pin (48) and the fourth pin (46).

11. Airbrake according to claim 7, characterized in that the first, second, third, fourth and fifth pins are separate from one another, the fourth and sixth pins coinciding.

12. Airbrake according to any one of the claims 7 to 11, characterized in that the fifth pin (54) is further removed from the common pin (24) than the third pin (48).

13. Airbrake according to any one of the claims 7 to 12, characterized in that the control mechanism comprises two assemblies (36) displaced substantially parallel to the rear spar (12), the inclination control means (32) also having an actuator (34) positioned between said two assemblies and connecting the rear spar (12) to the second panel (22).

## Patentansprüche

1. Flugzeugflügel mit einer Bremsklappe, die in einer Saugfläche (11) des Flügels (10) angeordnet ist, wobei die Bremsklapppe eine erste Platte (20) und eine zweite Platte (22) und Einrichtungen (32) zum Steuern der Neigung umfassen, deren Betätigung ermöglicht, die Bremsklappe in eine der folgenden Stellungen zu versetzen:
- eine geschlossene Stellung, in der die erste Platte 20 und die zweite Platte (22) aneinandergefugt sind und die Flügelsaugfläche (11) verlängern;
- eine offene Stellung, in der die erste Platte (20) und die zweite Platte (22) aneinandergefugt und mit demselben Winkel nach außen geschwenkt sind, bezogen auf die Flügelsaugfläche (11);
**dadurch gekennzeichnet,**
- daß die erste Platte (20) und die zweite Platte (22) in dieser Reihenfolge zwischen einem hinteren Längsträger (12) des Flügels und einer auftriebserhöhenden Klappe (16) angeordnet sind, und dadurch,
- daß eine Betätigung der Einrichtungen (32) zum Steuern der Neigung zudem ermöglicht, die Bremsklappe in Zwischenstellungen zu bringen, zwischen der geschlossenen Stellung und der offenen Stellung, in denen die zweite Platte (22) in bezug auf die erste Platte (20) und die Flügelsaugfläche (11) nach außen geschwenkt und von der ersten Platte (20) entfernt wird, um einen Schlitz (38) zu bilden.

2. Flugzeugflügel nach Anspruch 1, dadurch gekennzeichnet, daß die Zwischenstellungen eine Stellung mit einer sehr kleinen Schwenkung umfassen, in der die erste Platte (20) in bezug auf die Flügelsaugseite (11) leicht nach innen geschwenkt ist, und eine Stellung mit einer kleinen Schwenkung, in der die erste Platte (20) sich in der Verlängerung der Flügelsaugseite (11) befindet, sowie eine Stellung mit einer mittleren Schwenkung, in der die erste Platte (20) in bezug auf die Flügelsaugseite (11) nach außen geschwenkt ist, mit einem kleineren Winkel als dem Schwenkwinkel der zweiten Platte (22).

3. Flugzeugflügel nach einem der Ansprüche 1 und 2, dadurch gekennzeichnet, daß bei offener Stellung der Bremsklappe ein dem hinteren Längsträger (12) benachbarter Rand der ersten Platte (20) in bezug auf die Flügelsaugfläche (11) nach außen versetzt ist.

4. Flugzeugflügel nach einem der Ansprüche 1 und 2, dadurch gekennzeichnet, daß bei offener Stellung der Bremsklappe ein dem hinteren Längsträger (12) benachbarter Rand der ersten Platte (20) sich im wesentlichen in der Verlängerung der Flügelsaugseite (11) befindet.

5. Flugzeugflügel nach einem der vorangehenden Ansprüche, dadurch gekennzeichnet, daß die erste Platte (20) und die zweite Platte (22) durch eine im wesentlichen zu dem hinteren Längsträger (12) parallele erste, gemeinsame Achse schwenkbar an diesen hinteren Längsträger montiert sind.

6. Flugzeugflügel nach einem der vorangehenden Ansprüche, dadurch gekennzeichnet, daß die Einrichtungen (32) zum Steuern der Neigung durch denselben Betätigungsmechanismus (36) simultan auf die erste Platte (20) und auf die zweite Platte (22) wirken.

7. Flugzeugflügel nach einem der Ansprüche 5 und 6 kombiniert, dadurch gekennzeichnet, daß der Betätigungsmechanismus wenigstens ein System (36) umfaßt, das ein Schwenkstück (40) umfaßt, angelenkt an dem Längsträger (12) durch eine zweite Achse (42), und eine erste Gelenkstange (44), angelenkt an der ersten Platte (20) durch eine dritte Achse (48) und an dem Schwenkstück durch eine vierte Achse (46), sowie eine zweite Gelenkstange (50), angelenkt an der zweiten Platte (22) durch eine fünfte Achse (54) und an dem Schwenkstück durch eine sechste Achse (52), wobei die erste, zweite, dritte, vierte, fünfte und sechste Achse im wesentlichen parallel sind zu der ersten, gemeinsamen Achse (24).

8. Flugzeugflügel nach Anspruch 7, dadurch gekennzeichnet, daß die erste, zweite, dritte, vierte, fünfte und sechste Achse untereinander verschieden sind.

9. Flugzeugflügel nach Anspruch 8, dadurch gekennzeichnet, daß die zweite Achse (42) von der Flügelsaugfläche (11) weiter entfernt ist als die erste, gemeinsame Achse (24), und daß bei geschlossener Stellung der Bremsklappe die zweite Achse (42) sich im wesentlichen zwischen der dritten Achse (48) und der vierten Achse (46) befindet, wobei die sechste Achse (52) sich dann in Richtung auftriebserhöhender Klappe (16) verschiebt und von der Flügelsaugfläche (11) entfernt, in bezug auf die zweite Achse (42).

10. Flugzeugflügel nach Anspruch 9, dadurch gekennzeichnet, daß bei geschlossener Stellung der Bremsklappe die zweite Achse (42) leicht gegen die auftriebserhöhende Klappe (16) versetzt ist, bezogen auf eine die dritte Achse (48) und die vierte Achse (46) enthaltende Ebene.

11. Flugzeugflügel nach Anspruch 7, dadurch gekennzeichnet, daß die erste, zweite, dritte, vierte und fünfte Achse sich von den anderen unterscheiden, wobei die vierte und sechste Achse zusammenfallen.

12. Flugzeugflügel nach einem der Ansprüche 7 bis 11, dadurch gekennzeichnet, daß die fünfte Achse (54) von der gemeinsamen Achse (24) weiter entfernt ist als die dritte Achse (48).

13. Flugzeugflügel nach einem der Ansprüche 7 bis 12, dadurch gekennzeichnet, daß der Betätigungsmechanismus zwei Systeme (36) umfaßt, im wesentlichen parallel zu dem hinteren Längsträger (12) versetzt, wobei die Einrichtungen (32) zum Steuern der Neigung zudem einen Zylinder (34) umfassen, der zwischen den beiden Systemen angeordnet ist und den hinteren Längsträger (12) mit der zweiten Platte (22) verbindet.
